Europäisches Patentamt

European Patent Office

Office européen des brevets

(19)

(11) Veröffentlichungsnummer: **0 115 792**
**B1**

(12) **EUROPÄISCHE PATENTSCHRIFT**

(45) Veröffentlichungstag der Patentschrift:
**11.05.88**

(51) Int. Cl.⁴: **H 02 M 3/335**

(21) Anmeldenummer: **84100344.5**

(22) Anmeldetag: **14.01.84**

(54) Schaltnetzteil für ein Gerät mit Bereitschaftsbetrieb, insbesondere einen Fernsehempfänger.

(30) Priorität: **31.01.83 DE 3303114**

(43) Veröffentlichungstag der Anmeldung:
**15.08.84 Patentblatt 84/33**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**DE - A - 2 620 191**
**DE - A - 2 651 196**
**DE - A - 2 919 905**

(73) Patentinhaber: **TELEFUNKEN Fernseh und Rundfunk GmbH, Göttinger Chaussee 76,
D-3000 Hannover 91 (DE)**

(72) Erfinder: **von der Ohe, Wilfried, Holtenser Weg 35,
D-3257 Springe 5 (DE)**

(74) Vertreter: **Einsel, Robert, Dipl.-Ing., TELEFUNKEN Fernseh und Rundfunk GmbH Göttinger Chaussee 76,
D-3000 Hannover 91 (DE)**

ACTORUM AG

**Beschreibung**

Es ist bekannt (Funkschau 1975, Heft 5, Seiten 40–43), in einem Fernsehempfänger die notwendigen Betriebsspannungen mit einem Schaltnetzteil aus der Netzspannung zu erzeugen. Ein Schaltnetzteil ermöglicht die erwünschte galvanische Trennung der Empfängerschaltung vom Netz, ist wegen seiner hohen Arbeitsfrequenz in der Grössenordnung von 30 kHz wesentlich kleiner und leichter als ein Netztransformator und kann durch entsprechende Wicklungen oder Abgriffe auf seiner Primärseite eine Vielzahl von Betriebsspannungen unterschiedlicher Grösse und Polarität erzeugen.

Fernsehempfänger haben heute überwiegend einen sogenannten Bereitschaftsbetrieb, damit sie von einer Fernbedieneinheit einschaltbar sind. Zu diesem Zweck müssen die wesentlichen Betriebsspannungen abgeschaltet oder auf einen wesentlich kleineren Wert verringert werden, während wenigstens eine Betriebsspannung für den Fernbedienungsempfänger und gegebenenfalls einen Tuner bestehen bleiben muss.

Hierzu ist es bekannt (DE-OS-2 711 020), auf der Sekundärseite die bei Bereitschaftsbetrieb nicht benötigten Betriebsspannungen mit einem Relais abzuschalten. Ein Relais ist jedoch ein relativ teures und störanfälliges Bauteil. Ausserdem erhöht sich durch die verringerte Belastung im Bereitschaftsbetrieb die Arbeitsfrequenz des Schaltnetzteiles stark, wodurch sich ein schlechter Wirkungsgrad und ein relativ hoher Leistungsbedarf im Bereitschaftsbetrieb ergeben.

Es ist auch ein für Bereitschaftsbetrieb vorgesehenes Schaltnetzteil ohne Relais bekannt (DE-OS-2 624 965), bei dem die Sekundärseite des Trenntransformators bei Bereitschaftsbetrieb so stark belastet wird, dass durch die Kurzschlusseigenschaft die Betriebsspannungen auf einen genügend kleinen Wert abfallen. Diese Schaltung arbeitet jedoch bei geringen Netzspannungen von 110 V und insbesondere bei den zugehörigen Unterspannungen bis zu 70 V nicht mehr einwandfrei und hat ausserdem einen relativ schlechten Wirkungsgrad.

Es ist auch ein Schaltnetzteil für einen Fernsehempfänger mit Bereitschaftsbetrieb bekannt (DE-A-2 620 191), bei dem zur Stabilisierung der erzeugten Betriebsspannungen eine sekundärseitig erzeugte Betriebsspannung über einen ersten Weg auf eine primärseitig vorgesehene Steuerschaltung gelangt und zur Umschaltung auf Bereitschaftsbetrieb eine sekundärseitig erzeugte Stellgrösse über einen zweiten Weg so auf die Steuerschaltung einwirkt, dass die erzeugten Betriebsspannungen herabgesetzt werden. Diese Schaltung erfordert somit zwei Wege zwischen der Sekundärseite und der Primärseite. Mittel für eine galvanische Trennung innerhalb dieser beiden Wege zwischen Primärseite und Sekundärseite sind nicht offenbart.

Der Erfindung liegt die Aufgabe zugrunde, die zuletzt beschriebene Schaltung so weiterzubilden, dass bei Aufrechterhaltung der galvanischen Trennung zwischen Primärseite und Sekundärseite der Schaltungsaufwand für die Rückführung der Spannungen auf die Primärseite und die Verlustleistung bei Bereitschaftsbetrieb verringert werden.

Diese Aufgabe wird durch die im Anspruch 1 beschriebene Erfindung gelöst. Vorteilhafte Weiterbildungen der Erfindung sind in den abhängigen Ansprüchen beschrieben.

Es ist zwar ein Schaltnetzteil bekannt (DE-A-2 919 905), bei dem die Sekundärseite mit der Primärseite des Trenntransformators über ein galvanisches Trennelement verbunden ist. Dieses besteht alternativ aus einem Optokoppler, der eine Gleichspannung überträgt, oder aus einem Transformator, der die sekundärseitig erzeugte Wechselspannung überträgt. Dort dient das galvanische Trennelement jedoch nur zur Übertragung einer Regelspannung für die Stabilisierung der Betriebsspannungen. Eine von der Sekundärseite ausgehende Umschaltung der Primärseite für einen Bereitschaftsbetrieb ist dort nicht vorgesehen. Das Trennelement wird dort auch nicht in einer bestimmten Betriebsart gesperrt, sondern ist ständig wirksam.

Durch das Merkmal a) des Anspruchs 1 wird erreicht, dass die für die Netztrennung notwendige galvanische Trennung zwischen der Primärseite und der Sekundärseite aufrechterhalten bleibt. Durch die gleichzeitige Ausnutzung des Trennelementes für die Übertragung der Regelspannung für die Stabilisierung der Betriebsspannungen und der Stellgrösse für die Umschaltung auf Bereitschaftsbetrieb werden der Schaltungsaufwand und die im Bereitschaftsbetrieb auftretende Verlustleistung gering gehalten. Durch das Merkmal b) wird zusätzlich die bei Bereitschaftsbetrieb auftretende Verlustleistung verringert, weil der Weg von der Sekundärseite zur Primärseite durch das gesperrte Trennelement vollkommen abgeschaltet ist. Dadurch kann im Bereitschaftsbetrieb eine besonders niedrige Leistungsaufnahme in der Grössenordnung von 5 W erreicht werden. Der Normalbetrieb wird durch einen gezielten Eingriff von der Sekundärseite auf die Primärseite über den bei Bereitschaftsbetrieb unwirksamen Weg eingeleitet. Die Sperrung des Weges von der Sekundärseite zur Primärseite im Bereitschaftsbetrieb hat auch den Vorteil, dass die in diesem Weg befindlichen Bauteile während des Bereitschaftbetriebes keinem Verschleiss unterliegen und bei Ausfall eines Bauteiles in diesem Weg das Netzteil zwangsläufig in den Bereitschaftsbetrieb übergeht.

Ein Ausführungsbeispiel der Erfindung wird anhand der Zeichnung erläutert. Darin zeigen

Fig. 1 ein detailliertes Schaltungsbeispiel für das Schaltnetzteil,

Fig. 2, 3 den Verlauf von Spannungen und Strömen auf der Primärseite und

Fig. 4 Stromverläufe auf der Primärseite bei Bereitschaftsbetrieb.

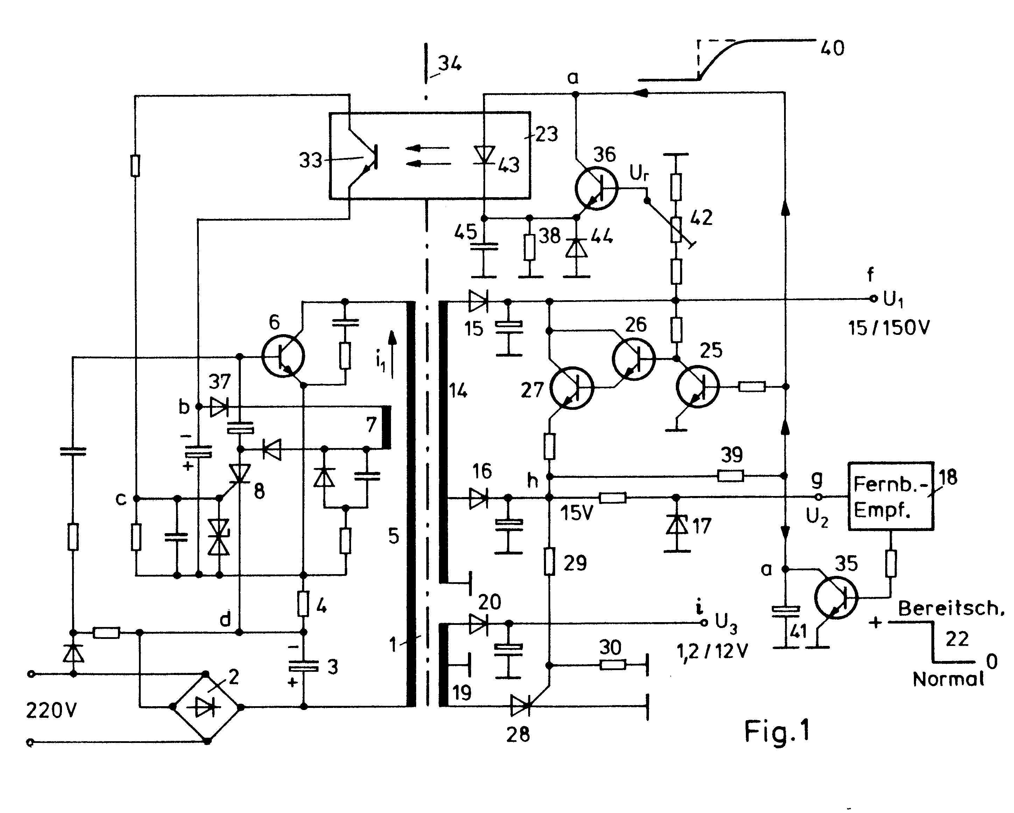

Das Schaltnetzteil gemäss Fig. 1 enthält auf der primärseite des Trenntransformators 1 den Netzgleichrichter 2, den Ladekondensator 3, den

Strom-Messwiderstand 4, die Arbeitswicklung 5, den Schalttransistor 6, die zur Schwingungserzeugung dienende Rückkopplungswicklung 7 und den zur periodischen Abschaltung des Transistors 6 dienenden Thyristor 8. Die Sekundärwicklung 14 liefert über den Gleichrichter 15 an der Klemme f eine Betriebsspannung U1 von 150 V. Ein Abgriff der Wicklung 14 liefert über den Gleichrichter 16 und die zur Spannungsstabilisierung dienende Zenerdiode 17 an der Klemme g die Betriebsspannung U2 für den Fernbedienungsempfänger 18. Eine weitere Sekundärwicklung 19 liefert über den Gleichrichter 20 an der Klemme i eine weitere Betriebsspannung U3. Die strichpunktierte Linie 34 deutet die galvanische Trennstelle zwischen dem Netz und der Empfängerschaltung an. An den Klemmen f und i gilt der erste, niedrige Spannungswert für Bereitschaftsbetrieb und der zweite, grössere Spannungswert für Normalbetrieb. Im folgenden werden die verschiedenen Betriebsarten sowie zusätzliche Baugruppen beschrieben.

Bereitschaftsbetrieb

Der ständig mit Betriebsspannung U2 versorgte Fernbedienungsempfänger 18 liefert die Stellgrösse 22 mit einem positiven Wert. Dadurch ist der Transistor 35 leitend und schliesst den Punkt a gegen Erde kurz. Am Punkt a steht somit keine Spannung, und der Transistor 36 ist stromlos. Die Leuchtdiode 43 des Opptokoppler 23 erhält ebenfalls keine Spannung, es gelangt kein Licht auf den Phototransistor 33, so dass dieser auch gesperrt ist. Die Kollektor-Emitter-Strecke des Transistors 33 liegt zwischen den Punkten b, c. Am Punkt b steht eine mit dem Gleichrichter 37 aus der Impulsspannung von der Wicklung 7 gewonnene Gleichspannung. Der Punkt c ist die Zündelektrode des Thyristors 8. Der gesperrte Transistor 33 hat auf die beiden Punkte b und c keinen Einfluss.

Die Abschaltung des durch den Transistor 6 fliessenden Stromes erfolgt jeweils dann, wenn der Thyristor 8 gezündet wird. Diese Zündung erfolgt, wenn an der Zündelektrode, also am Punkt c eine Spannung von +0,8 V gegenüber dem Punkt d auftritt. Die dort wirksame Spannung ist von dem Strom durch den Widerstand 4 abhängig. Durch Änderung der Spannung am Punkt c kann also der Abschaltzeitpunkt des Transistors 6 und damit die Amplitude der Impulsspannung und damit auch der erzeugten Betriebsspannungen geändert werden. Die beschriebene Schaltung ist folgendermassen bemessen. Die Zündung des Thyristors 8 und die Abschaltung des Transistors 6 erfolgen so früh, d.h. bei einem derart geringen Wert des Stromes i1 durch die Arbeitswicklung 5, dass nur die für Bereitschaftsbetrieb notwendige Leistung von ca. 5 W auf die Sekundärseite des Trenntransformators 1 übertragen wird. Die Spannungen U1 und U3 haben dann ihre geringen Werte von 15 V bzw. 1,2 V, bei denen die angeschlossenen Stufen in erwünschter Weise unwirksam sind, der Empfänger also praktisch ausgeschaltet ist. Durch diese Spannungsverringerung würde die Spannung an den Punkten h und g ebenfalls abfallen, so dass auch der Fernbedienungsempfänger 18 nicht mehr arbeiten würde. Um am Punkt g auch bei Bereitschaftsbetrieb die notwendige Spannung für den Fernbedienungsempfänger zu erzeugen, ist die Schaltung mit den Transistoren 25, 26, 27 vorgesehen, die als elektronischer Schalter zwischen den Punkten f und h wirkt. Durch die Erdung des Punktes a ist der Transistor 25 gesperrt, so dass die Transistoren 26, 27 leitend sind. Dadurch verbindet die leitende Kollektor-Emitter-Strecke des Transistors 27 die Punkte f und h, so dass die Betriebsspannung U1 mit ihrem geringen Wert von 15 V nunmehr in erwünschter Weise am Punkt h als Spannung für die Erzeugung der Spannung U2 für den Fernbedienungsempfänger 18 verfügbar ist. Diese Schaltung ist näher beschrieben in der älteren Patentanmeldung P 3 223 756.

Normalbetrieb

Bei Umschaltung von Bereitschaftsbetrieb auf Normalbetrieb empfängt der Empfänger 18 von einer Fernbedieneinheit ein Signal und erzeugt darauf die Stellgrösse 22 mit dem Spannungswert null. Der Transistor 35 wird gesperrt. Dadurch gelangt die Spannung vom Punkt h über den Widerstand 39 auf den Punkt a, so dass die Spannung 40 am Punkt a durch die Wirkung des Kondensators 41 langsam ansteigt. Die Leuchtdiode des Optokopplers 23 wird jetzt mit einem zunächst grossen Strom gespeist, so dass der Transistor 33 leitend wird. Durch die Kollektor-Emitter-Strecke des Transistors 33 wird der Punkt b mit dem Punkt c, also der Zündelektrode des Thyristors 8 verbunden. Dadurch gelangt die negative Spannung vom Punkt b an die Zündelektrode des Thyristors 8, so dass diese in negativer Richtung vorgespannt wird. Da der Thyristor 8 nur bei einer Spannung von +0,7 V am Punkt c gegenüber Punkt d zündet, muss für die Zündung über dem Widerstand 4 jetzt eine wesentlich grössere Spannung abfallen. Da diese Spannung dem Strom i1 proportional ist, erreicht jetzt der Strom i1 einen so hohen Wert, dass die für Normalbetrieb notwendige Leistung von ca. 100 W auf die Sekundärseite übertragen wird. Die Spannungen U1 und U3 nehmen ihre hohen Werte von 150 V bzw. 12 V an. Der Transistor 25 wird leitend, sperrt die Transistoren 26, 27 und trennt die Punkte f, h unterschiedlicher Spannung wieder voneinander.

Wenn die Spannung U1 ihren Nennwert von 150 V erreicht hat, gelangt eine von U1 über den Spannungsteiler 42 abgeleitete Regelspannung Ur auf die Basis des Transistors 36 und verringert den Strom durch die Leuchtdiode des Optokopplers auf einen Wert, der für die Aufrechterhaltung der Spannung U1 notwendig ist.

Funktion der Regelschaltung

Wenn die Spannung U1 kleiner wird, wird auch die Regelspannung Ur an der Basis des Transistors 36 kleiner, also weniger positiv. Der Transistor 36 wird weniger leitend, so dass ein grösserer Strom über die Leuchtdiode 43 fliesst. Dadurch wird der Transistor 33 mehr leitend und schaltet einen grösseren Anteil der negativen Spannung vom Punkt b auf die Zündelektrode des Thyristors 8. Das bedeutet, dass der Transistor 6 bei einem höheren Wert von i1 abschaltet. Die über den Trenntransformator 1 übertragene Energie, d.h. die Amplitude der erzeugten Impulse wird vergrössert, so dass der Spannungsverringerung von U1 im Sinne einer Stabilisierung entgegengewirkt wird. Im Normalbetrieb überträgt also der Optokoppler 23 einmal eine vom Punkt a gelieferte quasi digitale Stellgrösse zur Umschaltung der Primärseite auf die für Normalbetrieb notwendigen Bedingungen und ausserdem vom Punkt f die Regelspannung Ur für die kontinuierliche Stabilisierung der Amplitude der erzeugten Betriebsspannungen. Die Zenerdiode 44 dient als Spannungs-Referenzelement für die Auswertung der Regelspannung Ur zur Steuerung des Transistors 36.

Zusätzliche Schutzschaltung

In der Praxis kann es vorkommen, dass durch ein schadhaftes Bauteil die Betriebsspannungen U1, U2, U3 nicht mehr kontrolliert sind und unzulässig hohe Werte annehmen, die das Schaltnetzteil selbst oder angeschlossene Verbraucher gefährden. Als Schutz dafür ist an die Sekundärwicklung 19 zusätzlich der Thyristor 28 angeschlossen, an dessen Steuerelektrode der Punkt h über den Spannungsteiler 29, 30 angeschlossen ist. Bei störungsfreiem Normalbetrieb bleibt der Thyristor 28 durch entsprechende Bemessung der Widerstände 29, 30 gesperrt und hat praktisch auf die Schaltung keinen Einfluss. Bei einer unzulässigen Spannungserhöhung zündet der Thyristor 28 und bildet eine starke Belastung des Transformators für die stromleitende Phase. Dadurch bricht die Rückkopplungsspannung an der Rückkopplungswicklung 7 zusammen, so dass das Schaltnetzteil nicht mehr schwingt. Diese Schaltung ist näher beschrieben in der älteren Anmeldung P 3 220 188.

Modifizierte Umschaltung auf Normalbetrieb

Der Kondensator 41 in Fig. 1 bewirkt den gewünschten langsamen Anstieg der Stellgrösse 40. Es gibt Schaltungen, bei denen die den Normalbetrieb einleitende Stellgrösse nur kurzzeitig erscheint, wenn sie z.B. von einem sogenannten Wischkontakt des Netzschalters des Gerätes erzeugt wird. In diesem Fall muss die Stellgrösse unverzögert über den Optokoppler 23 übertragen werden, damit das Schaltnetzteil während der kurzen Dauer der Stellgrösse in den Normalbetrieb umschalten kann. Zu diesem Zweck ist in Fig. 1 der Kondensator 45 parallel zur Zenerdiode 44 vorgesehen, während der Kondensator 41 entfällt. Der Kondensator 45 bildet für eine kurzzeitige, impulsartige Stellgrösse einen Kurzschluss, so dass sofort ein ausreichend hoher Strom über die Fotodiode 43 fliessen kann, der in der beschriebenen Weise an der Primärseite die Umschaltung auf Normalbetrieb bewirkt. Der Widerstand 38 sorgt dafür, dass der Kondensator 45 auch bei kurzzeitig wiederholten Einschalten im Einschaltzeitpunkt immer wieder entladen ist. Im stationären Zustand des Normalbetriebs, d.h. wenn der Transistor 36 leitend und an seiner Basis durch die Regelspannung Ur gesteuert ist, ist der Kondensator 45 ohne Wirkung. Der beschriebene sprunghafte Anstieg der Stellgrösse 40 ist gestrichelt dargestellt.

Impulsverhalten der Primärseite bei Normalbetrieb und Bereitschaftsbetrieb

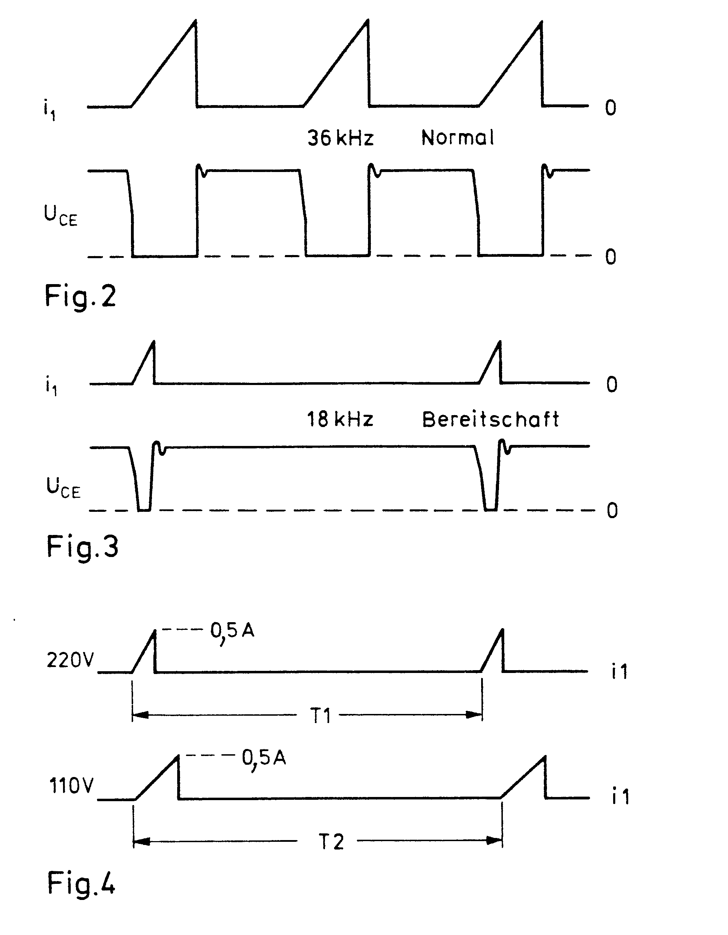

Fig. 2 zeigt den Strom i1 durch die Arbeitswicklung 5 und die Spannung $U_{CE}$ über der Kollektor-Emitter-Strecke des Transistors 6 für Normalbetrieb und eine Leistungsübertragung von 100 W. Die Arbeitsfrequenz beträgt dabei 36 kHz.

Fig. 3 zeigt die Werte von Fig. 2 für Bereitschaftsbetrieb. Der Strom i1 erreicht entsprechend geringere Werte, weil die Stromflussdauer des Transistors 6 durch den Thyristor 8 auf einen geringeren Wert gesteuert ist. Die Arbeitsfrequenz hat etwa den halben Wert wie bei Normalbetrieb, also etwa 18 kHz und liegt in vorteilhafter Weise ausserhalb des Hörbereiches. Diese verringerte Frequenz ist vorteilhaft, weil bei einem Anstieg der Frequenz wie bei bekannten Schaltungen der Schalttransistor 6 wegen der dann geringen Stromamplitude nicht mehr einwandfrei als Schalter arbeitet und die Verlustleistung an diesem Transistor erhöht wird. Die Leistungsaufnahme im Bereitschaftsbetrieb gemäss Fig. 3 beträgt etwa 5 W.

Stabilisierung im Bereitschaftsbetrieb

Im Bereitschaftsbetrieb ist der Optokoppler 23 gesperrt, so dass die zur Stabilisierung der Betriebsspannungen dienende Regelspannung Ur nicht wirksam ist. Trotzdem ändert sich die wirksame Spannung U2 für den Fernbedienungsempfänger 18 auch bei starken Änderungen der Netzspannung nur geringfügig. Dies wird anhand der Fig. 4 erläutert. Bei einer Netzspannung von 220 V steigt der Strom i1 auf einen Wert von 0,5 A an und wird dann jeweils mit dem Transistor 6 abgeschaltet. Nach Abbau der Energie im Transformator 1 erfolgt mit einer Periodendauer von T1 wieder eine periodische Einschaltung. Die Abschaltung des Stromes i1 erfolgt, wenn der Punkt c gegenüber dem Punkt d um +0,7 V positiv ist. Bei einer Netzspannung von 110 V ist wegen der verringerten Spannung am Ladekondensator 3 der Anstieg des Stromes i1 entsprechend flacher. Die Abschaltung erfolgt aber wiederum bei dem gleichen Spannungswert am Widerstand 4 und damit bei dem gleichen Wert des Stromes i1, wegen des flacheren Anstieges jedoch später. Die Zeit für den Energieabbau am Transformator 1, also jeweils zwischen dem Abschaltzeitpunkt und dem Einschaltzeitpunkt von i1 bleibt praktisch gleich, so dass die Zeit zwischen den Einschaltzeitpunkten nunmehr gleich T2, also grösser als T1 ist. Durch diese verringerte Frequenz der am Transformator 5 auftretenden Impulse wird die übertragene Energie verringert, so dass auch der Wert der Spannung U2 sinkt. Es ist jedoch ersichtlich, dass die relative Änderung von T1 auf T2 wesentlich geringer ist als die relative Änderung der

Netzspannung von 50%. Deshalb ändert sich auch bei einer starken Änderung der Netzspannung die Spannung U2 nur geringfügig. Eine geringe Änderung der Spannung U2 für den Fernbedienungsempfänger 18 ist ausserdem unkritisch, weil dessen Leistungsaufnahme klein und daher eine Stabilisierung der Betriebsspannung mit einfachen Mitteln, z.B. einer Zenerdiode möglich ist.

**Patentansprüche**

1. Schaltnetzteil für ein Gerät mit Bereitschaftsbetrieb, insbesondere für einen Fernsehempfänger, bei dem eine auf der Sekundärseite aus einer Betriebsspannung (U1) abgeleitete Regelspannung (Ur) zur Stabilisierung der auf der Sekundärseite erzeugten Betriebsspannungen (U1–U3) auf die Primärseite einwirkt und die Primärseite bei Bereitschaftsbetrieb durch eine auf der Sekundärseite auftretende Stellgrösse (40) so umgeschaltet ist, dass die Betriebsspannungen (U1–U3) herabgesetzt werden, gekennzeichnet durch folgende Merkmale:
a) ein aus der Stellgrösse (40) und der Regelspannung (Ur) erzeugtes elektrisches Signal wird über ein vom Trenntransformator (1) getrenntes galvanisches Trennelement (23) auf die Primärseite übertragen,
b) das Trennelement (23) ist bei Bereitschaftsbetrieb gesperrt und die Primärseite so ausgelegt, dass sie für sich allein ohne Steuerung durch das Trennelement (23) nur die für Bereitsschaftsbetrieb erforderliche Leistung auf die Sekundärseite überträgt.

2. Netzteil nach Anspruch 1, dadurch gekennzeichnet, dass das Trennelement ein Optokoppler (23) ist.

3. Netzteil nach Anspruch 2, dadurch gekennzeichnet, dass dem Eingang des Optokopplers (23) die Kollektor-Emitter-Strecke eines Transistors (36) parallel geschaltet ist, der im Bereitschaftsbetrieb gesperrt und im Normalbetrieb durch die Stellgrösse (22, 40) mit Betriebsspannung versorgt und an der Basis durch die Regelspannung (Ur) gesteuert ist.

4. Netzteil nach Anspruch 3, dadurch gekennzeichnet, dass der Emitter des Transistors (36) über eine Zenerdiode (44) geerdet ist.

5. Netzteil nach Anspruch 1, dadurch gekennzeichnet, dass auf der Sekundärseite Mittel (41) vorgesehen sind, die bewirken, dass die Stellgrösse (40) langsam entsteht und ein weiches Umschalten in den Normalbetrieb bewirkt.

6. Netzteil nach Anspruch 5, dadurch gekennzeichnet, dass zwischen einem die Stellgrösse führenden Punkt (a) und Erde ein Kondensator (41) anliegt.

7. Netzteil nach Anspruch 1, dadurch gekennzeichnet, dass auf der Sekundärseite Mittel (45) vorgesehen sind, die eine nur kurzzeitig auftretende Stellgrösse (Us) unverzögert auf die Primärseite übertragen.

8. Netzteil nach Anspruch 4 und 7, dadurch gekennzeichnet, dass parallel zu der Zenerdiode (44) ein Kondensator (45) liegt.

9. Netzteil nach Anspruch 8, dadurch gekennzeichnet, dass parallel zum Kondensator (45) ein Widerstand (38) liegt.

**Claims**

1. A switching network section for a device with a stand-by mode, more particularly for a television receiver, in which a regulating voltage (Ur), which is derived on the secondary side from an operating voltage (U1), for stabilising the operating voltages (U1–U3) produced on the secondary side has an effect on the primary side, and the primary side is switched over during stand-by a setting signal (40) which occurs on the secondary side so that the operating voltages (U1–U3) are lowered, characterised by the following features:
a) an electrical signal produced from the setting signal (40) and the regulating voltage (Ur) is transmitted to the primary side via an electrical isolator element (23), which is distinct from the isolation transformator (1).
b) the isolator element (23) is blocked during stand-by and the primary side is designed so that on its own without any control by the isolator element (23) the primary side transmits only the power required for stand-by to the secondary side.

2. A network section according to claim 1, characterised in that the isolator element is an optical coupler (23).

3. A network section according to claim 2, characterised in that the collector-emitter path of a transistor (36) is connected in parallel with the input of the optical coupler (23), which transistor (36) is blocked during stand-by and during the normal operation is fed with operating voltage by the adjustable setting signal (22, 40) and is base controlled by the regulating voltage (Ur).

4. A network section according to claim 3, characterised in that the emitter of the transistor (36) is earthed via a zener diode (44).

5. A network section according to claim 1, characterised in that on the secondary side means (41) are provided which cause the setting signal (40) to appear slowly and cause a soft switchover into the normal operation.

6. A network section according to claim 5, characterised in that a capacitor (41) lies between a point (a), which carries the setting signal and earth.

7. A network section according to claim 1, characterised in that means (45) are provided on the secondary side, which transmit underlayed to the primary side a setting signal (Us) which occurs only temporarily.

8. A network section according to claims 4 and 7, characterised in that a capacitor (45) lies parallel to the zener diode (44).

9. A network section according to claim 8, characterised in that a resistor (38) lies in parallel with the capacitor (45).

**Revendications**

1. Bloc de raccordement au réseau destiné à un appareil avec état de veille, notamment un téléviseur, où une tension de régulation (Ur), dérivée au secondaire à partir d'une tension de service (U1), agit sur le côté primaire afin de stabiliser les tensions de service (U1 à U3) produites côté secondaire, et que le côté primaire, en service instantané, est commuté par une grandeur de régulation (40) apparaissant au secondaire, de telle sorte que les tensions de service (U1 à U3) sont abaissées, caractérisé par les faits suivants:

a) un signal électrique, produit à partir de la grandeur de régulation (40) et de la tension de régulation (Ur), est transmis au primaire par un élément d'isolation galvanique, distinct du transformateur d'isolation (1):

b) l'élément d'isolation galvanique (23) est bloqué en état de veille et le primaire est réalisé de façon à transmettre de lui-même et sans être commandé par l'élément d'isolation galvanique (23), la seule puissance nécessaire à l'état de veille au secondaire.

2. Bloc de raccordement au réseau selon la revendication 1, caractérisé par le fait que l'élément d'isolation galvanique est un photocoupleur (23).

3. Bloc de raccordement au réseau selon la revendication 2, caractérisé par le fait que l'on branche en parallèle sur l'entrée du photocoupleur (23) le trajet collecteur-émetteur d'un transistor (36), ce transistor étant bloqué en état de veille et, en service normal, alimenté en tension de service par la grandeur de régulation (22, 40) et commandé à sa base par la tension de régulation (Ur).

4. Bloc de raccordement au réseau selon la revendication 3, caractérisé par le fait que l'émetteur du transistor (36) est relié à la masse par l'intermédiaire d'une diode Zener (44).

5. Bloc de raccordement au réseau selon la revendication 1, caractérisé par le fait que côté secondaire, des moyens (41) sont prévus ayant pour effet que la grandeur de régulation s'établit lentement et agit pour commander un passage souple en service normal.

6. Bloc de raccordement au réseau selon la revendication 5, caractérisé par le fait qu'on branche un condensateur (41) entre le point (a) auquel arrive la grandeur de réglage, et la masse.

7. Bloc de raccordement au réseau selon la revendication 1, caractérisé par le fait qu'on dispose au secondaire des moyens (45) qui transmettent sans retard au primaire une grandeur de régulation n'apparaissant que pendant un bref instant (Us).

8. Bloc de raccordement au réseau selon les revendications 4 et 7, caractérisé par le fait qu'un condensateur (45) est disposé parallèlement à la diode Zener (44).

9. Bloc de raccordement au réseau selon la revendication 8, caractérisé par le fait qu'une résistance (38) est disposée parallèlement au condensateur (45).

Fig.1

**Fig.2**

**Fig.3**

**Fig.4**